(19) Europäisches Patentamt

European Patent Office

Office européen des brevets

(11) **EP 4 749 954 A1**

(12) **EUROPEAN PATENT APPLICATION**

(43) Date of publication:
**27.05.2026 Bulletin 2026/22**

(21) Application number: **25214646.9**

(22) Date of filing: **10.11.2025**

(51) International Patent Classification (IPC):
**H04B 10/2575** (2013.01)  **H04B 10/278** (2013.01)
**H04J 14/02** (2006.01)

(52) Cooperative Patent Classification (CPC):
**H04B 10/25756; H04B 10/278; H04J 14/0227;
H04J 14/0269**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.11.2024 US 202418956507**

(71) Applicant: SubCom, LLC
**Eatontown, NJ 07724 (US)**

(72) Inventors:
• Xu, Yunlu
  **Eatontown, 07724 (US)**
• Kram, Richard
  **Eatontown, 07724 (US)**
• Tsaltskan, Yuriy
  **Eatontown, 07724 (US)**
• Bodner, Eric
  **Eatontown, 07724 (US)**

(74) Representative: **Arnold & Siedsma
Bezuidenhoutseweg 57
2594 AC The Hague (NL)**

(54) **DISTRIBUTED NETWORK ELEMENT AND UNDERSEA NETWORK ELEMENT MANAGEMENT SYSTEM FOR OPTICAL COMMUNICATION SYSTEMS**

(57)    An optical communication system and method. The system includes a plurality of cable landing stations configured to be communicatively coupled using one or more optical communication cables in a peer-to-peer network for routing of one or more optical signals using one or more network elements. Each cable landing station includes a management device configured to determine one or more optical communication paths for routing optical signals, and a command/response optical device communicatively coupled to the management device for routing optical signals in accordance with the optical communication path. In response to receiving a request for routing at least one optical signal, the management device of each cable landing station is configured to determine at least one optical communication path for routing the optical signal in accordance with a topology map of the peer-to-peer network of the plurality of cable landing stations.

FIG. 2A

EP 4 749 954 A1

**Description**

**TECHNICAL FIELD**

This disclosure relates generally to optical communication systems, and in particular to distributed network elements and management systems.

**BACKGROUND**

An undersea fiber communication system is a complex network of interconnected components that work together to transmit data across vast distances undersea. Typically, the system includes one or more optical fiber segments, which are responsible for transmitting data signals. However, these fiber segments can only transmit data over limited distances, so repeaters are used to amplify the signal and, thus, extend the transmission range of signals. In addition to the optical fiber segments and repeaters, an undersea fiber communication system can also include one or more smart network elements, which may be positioned on land (e.g., a dry plant) and/or underwater (e.g., wet plant). The smart network elements (SNE) and smart undersea network elements (SUNE) are typically responsible for managing flow of data signals through the communication system to ensure efficient and reliable transmissions. However, existing systems are costly and not scalable, suffer from signal transmission latency, include complicated setups that are prone to failure, and lack flexibility.

**SUMMARY**

The current subject matter relates to an optical communication system. The system may include a plurality of cable landing stations configured to be communicatively coupled using one or more optical communication cables in a peer-to-peer network for routing of one or more optical signals using one or more network elements. Each cable landing station in the plurality of cable landing stations may include a management device configured to determine one or more optical communication paths for routing one or more optical signals, and a command/response optical device communicatively coupled to the management device for routing the one or more optical signals in accordance with the optical communication path. In response to receiving a request for routing at least one optical signal in one or more optical signals, the management device of each cable landing station may be configured to determine at least one optical communication path in one or more optical communication paths for routing at least one optical signal in accordance with a topology map of the peer-to-peer network of the plurality of cable landing stations.

The current subject matter may be configured to include one or more of the following optional features. Each cable landing station may include a storage location for storing the topology map of the peer-to-peer network.

Determination of the at least one optical communication path may include identifying at least one of: at least one network element in one or more network elements, at least one cable landing station in the plurality of cable landing stations, and any combination thereof, configuring, using one or more routing parameters, one or more command/response optical devices of respective cable landing stations for routing of at least one optical signal from first configurations of respective one or more command/response optical devices to second configurations of the respective one or more command/response optical devices; and determining, based on the identifying and the configuring, at least one optical communication path. One or more command/response optical devices of respective cable landing stations may be reconfigured from the second configurations to the first configurations subsequent to routing of at least one optical signal.

Each cable landing station in the plurality of cable landing stations may be configured as an active cable landing station.

The plurality of cable landing stations may be communicatively coupled to a data communication network, wherein the data communication network may be configured to route one or more data signals using the peer-to-peer network of the cable landing stations. Configurations of the management device and the command/response optical device of each cable landing station may be determined based on a timestamp associated with connection of the data communication network to the peer-to-peer network of the cable landing stations. Each cable landing station in the plurality of cable landing stations may be configured to merge configurations of its management device and the command/response optical device with one or more configurations of management devices and the command/response optical devices of at least another cable landing station in the plurality of cable landing stations based on the timestamp.

One or more network elements may include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof.

The current subject matter relates to an optical communication apparatus. The system may include a management device configured to determine one or more optical communication paths for routing one or more optical signals using a topology map of a peer-to-peer network of a plurality of cable landing stations; a command/response optical device communicatively coupled to the management device for routing one or more optical signals in accordance with the optical communication path. In response to receiving a request for routing at least one optical signal in one or more optical signals, the management device may be configured to determine, using the topology map, at least one optical communication path in one or more optical communication paths for routing at least one optical signal to at least another cable landing station in the peer-to-peer network.

The current subject matter may include one or more of the following optional features. Determination of at least one optical communication path may include identifying at least one of: at least one network element in one or more network elements, the another cable landing station, and any combination thereof, configuring, using one or more routing parameters, the command/response device and another command/response optical device of the another cable landing station for routing of at least one optical signal from first respective configurations of the command/response device and another command/response optical device to second respective configurations of the command/response device and another command/response optical device, and determining, based on the identifying and the configuring, at least one optical communication path.

One or more network elements may include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof.

The command/response device and another command/response optical device may be reconfigured from the second respective configurations to the first respective configurations subsequent to routing of at least one optical signal.

The management device may be communicatively coupled to a data communication network, wherein the data communication network may be configured to route one or more data signals using the peer-to-peer network. Configurations of the management device and the command/response optical device may be determined based on a timestamp associated with connection of the data communication network to the peer-to-peer network. Configurations of the management device and the command/response optical device may be configured to be merged with one or more configurations of management device and command/response optical device of at least another cable landing station based on the timestamp.

The current subject matter relates to a computer-implemented method. The method may include receiving, using at least one processor, a request for routing at least one optical signal, accessing, using at least one processor, a topology map of a peer-to-peer network of a plurality of cable landing stations, determining, using at least one processor, using the topology map, one or more optical communication paths for routing at least one optical signal. selecting, using at least one processor, at least one optical communication path, configuring, using at least one processor, one or more optical devices in at least one optical communication path for routing of at least one optical signal, and routing, using at least one processor, at least one optical signal using the configured one or more optical devices in at least one selected optical communication path.

The current subject matter may include one or more of the following optional features. One or more optical devices include at least one of: one or more network elements, one or more command/response optical device, and any combination thereof. The configuring may include identifying at least one of: at least one network element in one or more network elements, at least one cable landing station in a plurality of cable landing stations, and any combination thereof, configuring, using one or more routing parameters, one or more command/response optical devices of respective cable landing stations for routing of at least one optical signal from first configurations of the respective one or more command/response optical devices to second configurations of the respective one or more command/response optical devices, and determining, based on the identifying and the configuring, at least one optical communication path. One or more command/response optical devices of respective cable landing stations may be reconfigured from the second configurations to the first configurations subsequent to routing of the at least one optical signal.

The details of one or more variations of the subject matter described herein are set forth in the accompanying drawings and the description below. Other features and advantages of the subject matter described herein will be apparent from the description and drawings, and from the claims.

## BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosure.In the drawings,

FIG. 1 illustrates an example of an optical communication system;
FIGS. 2a-c illustrate an example optical communication system, according to the current subject matter;
FIGS. 3a-b illustrate an example optical communication system, according to some the current subject matter;

FIG. 4 illustrates a process that may be executed by one or more components of the system shown in FIGS. 3a-b for determining a CRE path from between one or more components of the system shown in FIGS. 3a-b, according to some the current subject matter;

FIG. 5 illustrates an example process, according to the current subject matter; and

FIG. 6 illustrates an example system, according to the current subject matter.

## DETAILED DESCRIPTION

To address these and potentially other deficiencies of currently available solutions, the current subject matter relates to methods, systems, articles of manufacture, and the like that can, among other possible advantages, provide optical communication systems that include distributed network elements and device management systems.

An optical communication system can include one or more and/or a collection of optical transmission devices (e.g., on shore(s) and/or underwater) that are communicatively coupled using one or more optical fibers. The optical communication system can provide transparent end-to-end optical signal transmission capability between one or more cable stations. The optical signal transmitted between cable stations can include one or more and/or a set of optical channels, each with their own central frequency and a bandwidth. Most optical channels can be utilized to transparently carry one or more optical signals that enter the optical communication system at one or more cable stations (e.g., one or more on-shore stations, one or more underwater cable station, etc.) and exit at another cable station.

In complex optical communication systems, it is important to have a dedicated management platform to manage various optical devices, including network elements (such as, for example, but not limited to, smart network elements, smart undersea network elements, branching units, optical branching units, add/drop branching units, optical add/drop branching units, power feed branching units, repeaters, reconfigurable optical add drop multiplexers (ROADMs), etc.). The management platform handles a wide range of tasks, including, but not limited to, configuration control, alarm and event notification, performance data retrieval and storage, fault analysis, etc. Configuration control involves configuring and managing various devices that make up the optical communication system network of devices. This can include set up of new devices, updating existing devices, configuring network settings, etc. Alarm and event notification functionality allows the platform to detect and report on any alarms and/or events that occur within the network, such as, for example, link failures, power outages, equipment malfunctions, etc. This allows network administrators to quickly identify and address any issues that may arise. Performance data retrieval and storage allows effective undersea fiber communication management. Here, the management platform can collect and store performance data from all of the devices in the network, including optical power levels and temperatures. This data can then be used to analyze network performance and identify any areas that may need attention. Using the fault analysis function, the management platform can identify and diagnose any faults that occur within the network, such as, for example, link failures, equipment malfunctions, etc. This can involve analyzing data from various devices in the network to determine the root cause of the fault and provide recommendations for how to resolve it.

The management platform can include a network management system (NMS) that can utilize one or more of the optical channels (e.g., frequencies, etc.) that may be reserved for its use. For example, a particular reserved optical channel can be dedicated to carry management traffic (e.g., telemetry traffic) between the NMS and an underwater equipment (e.g., an underwater cable station, etc.). Telemetry commands can be transmitted to underwater device(s) using command/response equipment (CRE) of one or more on-shore cable stations. Telemetry responses from the underwater device(s) can be received by the same and/or different CREs of other cable stations (e.g., on-shore, underwater, etc. cable stations). The telemetry signals received/transmitted by the NMS can be transmitted utilizing the structure/capabilities/functionalities/etc. of the optical communication system. In some cases, a telemetry path from a particular CRE of a cable station to an underwater device (e.g., SUNE) over a reserved optical channel might not be always available at any given moment. Thus, to transmit a telemetry signal to that underwater device, NMS can select and/or determine a specific CRE of a cable station and an associated telemetry path that can allow for the telemetry signal to reach the destination underwater device (and/or any other device) and a response optical signal to reach at least one of the CREs in the system. If, based on the system's current configuration and/or run-time status, no such telemetry path is available, NMS can determine to temporarily reconfigure one or more of the underwater devices (e.g., SUNE, etc.) in order to provision the desired telemetry path.

In addition to the above functionalities, an undersea fiber communication management system must also be highly scalable, available, and/or fault tolerant. Scalability is important because undersea fiber communication systems are often required to support large amounts of data traffic, so the management platform must be able to grow and adapt to meet these demands. Availability is likewise important, as undersea fiber communication systems must be constantly available to ensure uninterrupted data transmission, which may require the management platform to be highly reliable and have redundant components in place to ensure that the system can continue to operate in the event of a failure. Fault tolerance enables the communication system to withstand various types of faults, such as, for example, equipment failures or link outages, without causing data loss or network downtime. The management platform may have redundant components that allow it to quickly detect and/or recover from any faults that do occur. The management platform may also determine the shortest telemetry path that manages command response devices, which send control signals to the smart undersea network elements (SUNEs). This may ensure that control signals are transmitted quickly and reliably for maintaining the performance and reliability of the network.

Some conventional management platforms operate by deploying a single active instance of a management platform or other type of management device at a cable station or a node (terms used interchangeably herewith) in a network of cable stations/node connected using one or more cables that include one or more fiber pairs. To ensure that there is only one active instance at any given time, existing systems use a self-coordination algorithm, which allows instances to communicate and coordinate with one another, thereby ensuring that only one instance in such network of nodes is active and controlling other nodes at any given time. The other nodes are typically stand-by nodes and receive data from the node that includes the active instance for synchronization purposes. This ensures that the stand-by nodes have the most up-to-date information about the state of the nodes and any of the network devices that those nodes manage. This redundancy allows the system to remain operational even when a failure of the active instance occurs. The algorithm can detect when the active instance has failed and automatically activate a stand-by node to replace the failed node as the new active instance node.

The active instance node can identify a nominally shortest and/or most reliable data telemetry path by analyzing a network topology map that can be used to connect command/response equipment (CRE) of each node to each network element (e.g., SUNE, etc.) based on shared optical fiber pairs and/or channels. The network topology can also be updated in real-time and/or near real-time using one or more notifications that may be received from the network elements. As a result, the active instance node can select a specific CRE using a current network topology. Moreover, a network management system (NMS) can receive similar notifications from network elements (e.g., SUNE, etc.) via an active wet plant manager (WPM) service and use them to dynamically update network and performance information. In some cases, the NMS can manage both smart and non-smart undersea managed elements, displaying information about both through a visualized network topology map.

While the existing systems are capable of determining the shortest paths through its topology for the control of network elements, they are typically unable to support complexities of today's undersea cable system architectures, where a large portion of possible optical paths might be blocked (e.g., using optical add and drop multiplexers, etc.). Further, some existing undersea cable systems may implement active optical add/drop modifications, which involve dynamic insertion and extraction of optical signals of certain frequencies at specific points along the optical cable route without disrupting the entire system. However, some such systems are not designed to accommodate active modifications, as they are primarily focused on routing signals through the most direct path available. As a result, the systems might not be able to effectively manage requirements of dynamic routing of telemetry signals and/or complex network topologies of modern undersea cable systems, potentially leading to inefficiencies. Additionally, since the existing management platforms have a single active node and multiple standby nodes, their active node is not balanced, where all management data/signal traffic flows through the active node and puts an extra requirement on the performance of computer hardware, thereby making such systems inefficient and costly. Further, the existing systems are typically not scalable, where with an increase in a number of standby nodes, the burden of processing additional events associated with new nodes in the active node can substantially increase, as the scalability is limited by the node's hardware at deployment time. The existing systems may also suffer from latency and might have slow connections. Moreover, the systems typically rely on a reliable data communication network (DCN), with which the connection is not always stable in open cable submarine systems, as each user typically deploys their own DCNs. Without a stable DCN, the operational capabilities of systems may suffer from complicated synchronization algorithms, potential loss of key configuration data, and other issues. Lastly, the existing systems do not provide flexibility, as they select specific active nodes based on, for example, a preset order, thereby making them inefficient when the load is too high on one or more servers due to other activities.

To resolve these issues, the current subject matter relates to an optical communication system that may include a plurality of cable landing stations that may be configured to be communicatively coupled using one or more optical communication cables in a peer-to-peer network. Each such cable landing station may be configured as an active node in the optical communication system and may be used for routing of one or more optical communication signals using one or more network elements that may be communicatively coupled to such cable landing stations using optical communication cables. Moreover, the cable landing stations may be communicatively coupled to a data communication network. The data communication network may be configured to route one or more data signals using the peer-to-peer network of the cable landing stations and/or using third-party data networks, such as, for example, satellite-based transport systems, and/or using any other type of networks, and/or using any combination of networks.

Each cable landing station may include, for example, a management device that may determine one or more optical communication paths for routing optical communication signals (e.g., which network elements to connect to for routing of telemetry signals). The cable landing station may also include a command/response optical device (e.g., CRE) that may be communicatively coupled to the management device. The management device may use the CRE to route optical communication signals (which may, for example, include telemetry signals) in accordance with the determined optical communication path. Once a request for routing an optical communication signal is received, the management device may determine at least one optical communication path for routing the optical communication signal using a topology map of the peer-to-peer network.

The cable landing station may include a storage location (e.g., database, etc.) that may store the topology map of the peer-to-peer network. The storage location may also store information about various communication parameters (e.g., frequency, etc.) for routing of signals using the topology map. The topology map may also be updated, and an updated version may be stored in the storage location. The topology map may include information about various cable landing stations, network elements, connections between cable landing stations and network elements, etc.

For example, an optical communication path may include one or more network elements, at least one or more cable landing stations, and any combination thereof. One or more or each of these may be identified by the management device for routing of an optical communication (e.g., a telemetry, etc.) signal. Once identified, the management device may configure, using one or more routing parameters (e.g., frequency, operating capability, etc.), one or more command/response optical devices of respective cable landing stations for routing of optical communication signals, including routing of optical telemetry signals. The configurations of the CRE devices may be changed from respective first configurations (e.g., initial configurations of the CRE devices) to respective second configurations (e.g., configurations that may be needed for routing a specific optical telemetry signal on a specific optical communication path). Once the optical communication (e.g., telemetry, etc.) signal has been transmitted, the command/response optical devices of respective cable landing stations may be reconfigured from the second configurations to the first or initial configurations. The configurations of the management device(s) and/or the command/response optical device(s) of each cable landing station may be determined based on a timestamp associated with connection of the data communication network to the peer-to-peer network of the cable landing stations. For instance, upon reconnection of the data communication network (e.g., after its failure) to the cable landing station(s), the configurations of the management and/or CRE device(s) may be merged among cable landing stations based on the timestamp.

In the following description, the term "path" and/or "link" may refer to any type of communicative coupling and/or connection and may encompass, but is not limited to, an optical coupling and/or connection, electrical coupling and/or connection, electro-optical coupling and/or connection, electro-mechanical coupling and/or connection, electro-optical-mechanical coupling and/or connection, and/or any other type of coupling and/or connection that is capable of transmitting and/or receiving any type of signal.

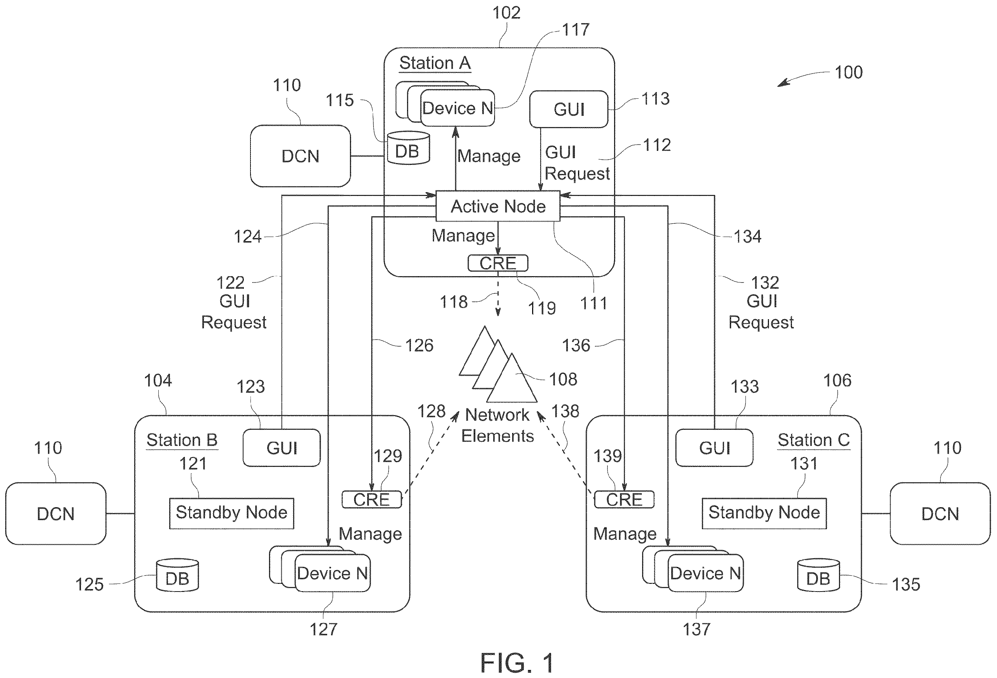

FIG. 1 illustrates an example of an optical communication system 100. The system 100 may be configured to provide optical communications among one or more cable landing stations and may implement one or more network elements (e.g., UNE, SUNE, etc.) arrangement in one or more network topologies.

The optical communication system 100 can include an optical cable system extending between two or more cable landing stations (CLSs), with the optical cable system providing at least one optical cable. Each CLS can execute a respective instance of a network management application or service (e.g., a wet plant manager (WPM)) to perform self-coordination between cable stations such that only one instance of the network management service is active at any given time. The active network management service supports a plurality of network topologies architected around network elements (e.g., UNEs, SUNEs, etc.) and bridges them such that requests to communicate (e.g., sending and receiving optical signals) with a particular network element get handled in a transparent manner without requesters' specific knowledge of which command/response (CR) telemetry path and/or network was utilized to satisfy the request. In addition, the active network management service allows network element(s) to propagate events to the optical communication system in order to provide up-to-date notification of network topology changes, measurements and faults, for example. In turn, the optical communication system may include a network management service (NMS) that receives the network elements' events and displays a visual representation of changes to network topology to a user. Thus, the active network management service may enable high-level network management functions by the NMS including automated fault-recovery schemes, dynamic transmission trail (path) topologies through reconfiguration of network elements, provisioning of capacity allocation plans (CAPs) via adjustments to optical add/drop multiplexer (OADM) assignments, remotely initiated network elements firmware updates, etc.

The network elements can generally include any undersea element that facilitates optical communication along the cable system between CLSs and is configured with software and/or hardware that can service management requests from the active network management service. An undersea element can be a smart undersea element when that undersea element includes the ability to be remotely managed by the active network management service. Remote management functions can include, for example, diagnostics, monitoring, provisioning/re-provisioning, and execution of one or more commands by a given network element. In addition, the remote management functions implemented by a network element may also facilitate the above-described high-level network management functions provided by the active network management service. The network elements use a command/response management approach to receive and execute commands originating from the active network management service. Some example network element types include optical add/drop branching units (BUs), power feed BUs, and intelligent repeaters/amplifiers, etc. As can be understood, any other types of undersea network elements can be used.

As shown in FIG. 1, the system 100 may include cable landing stations 102, 104, 106 and one or more network elements 108. The stations 102-106 may be communicatively coupled to the network element(s) 108 using, for example, a predetermined network topology map. Each of the cable landing stations 102-106 may also be communicatively coupled to a data communications network (DCN) 110, which may request transmission of various data (e.g., signals, emails, web browsing requests, etc.) through the system 100 using DCN 110.

In the system 100, cable landing station 102 may be configured as a primary or an active node cable landing station and cable landing stations 104, 106 may be configured as secondary or standby node cable landing stations. By being the primary cable landing station, the station 102 may be configured to be a primary operating station of the system 100, whereas cable landing stations 104, 106 may become active upon receiving appropriate instructions/signals/management commands/etc. over data network from the station 102. The stations 104, 106 may also receive, store, and implement configurations of the station 102.

The cable landing station 102 may include a processing element 111, a graphical user interface 113, a database 115, one or more network/computing devices 117, and a command/response equipment (CRE) device 119. Similarly, the cable landing station 104 may include a processing element 121, a graphical user interface 123, a database 125, one or more network/computing devices 127, and a command/response equipment (CRE) device 129, and cable landing station 106 may include a processing element 131, a graphical user interface 133, a database 135, one or more network/computing devices 137, and a command/response equipment (CRE) device 139.

The processing element 111 of the station 102 may be configured to receive one or more requests 112 from the graphical user interface 113 (e.g., for transmission of optical telemetry signals) using one or more topology maps that may be stored in the database 115. Further, in addition to managing devices 117, the processing element 111 may be configured to manage computing/network devices 127 of the cable landing station 104 via DCN link(s) 124 and computing/network devices 137 of the cable landing station 106 via DCN link(s) 134. The processing element 111 may also manage CRE device 119 as well as CRE device 129 of the station 104 via DCN link(s) 126 and CRE device 139 of station 106 via DCN link(s) 136 to coordinate transmission of data (e.g., in response to request(s) 112, request(s) 122 transmitted from the station 104, request(s) 132 transmitted from the station 106) via one or more network elements 108, where CRE devices 119, 129, 139 may be communicatively coupled to the network elements 108 using one or more optical communication cables 118, 128, 138, respectively.

The processing element 111 may be configured to provide station configuration/routing/etc. parameter(s), setting(s), network topology map(s), etc. to stations 104 and 106 for storage in databases 125, 135, respectively. Such configuration/routing/etc. parameter(s), setting(s), network topology map(s), etc. may be configured to overwrite any of configuration/routing/etc. parameter(s), setting(s), network topology map(s), etc. of the stations 104 and 106 to ensure that this information is the same across all stations, which allows the station 102 to be the primary node in the system 100 and stations 104 and 106 the secondary nodes.

The processing element 111 can determine a nominally shortest and/or least error prone data telemetry path at least in part by examining a network topology map that associates command/response equipment (CRE) 119, 129, 139, with network element(s) 108 based on, for example, shared optical fiber pairs (and/or channels). The processing element 111 can update the network topology based on real-time and/or near real-time notifications from network elements 108 as well as use them to, for example, dynamically update network and performance information. Further, the element 111 can select a particular CRE 119, 129, 139 based on up-to-date network topologies for routing of telemetry signals.

As shown in FIG. 1, the network elements 108 may be communicatively coupled to the stations 102-106 (e.g., via CREs 119, 129, 139, respectively) using one or more optical cables (not shown in FIG. 1). The cables can span a body of water, e.g., a sea, an ocean, etc. The network elements 108 may be positioned on the sea floor and can communicatively couple cable landing stations 102-106, one or more of which, in some cases, may be positioned on-land at, e.g., at beach landings. Alternatively, or in addition, one or more of stations 102-106 can be positioned on-land (e.g., a beach landing), undersea, at sea (e.g., on an oil and/or drilling platform, and/or any other man-made structure, etc.).

The network elements 108 can implement and/or support transmitting data using a standard transport data protocol, such as, in accordance with the G.709 standard titled "Interfaces for the optical transport network", adopted and published on Dec. 13, 2012 by the International Telecommunication Union (ITU). In that regard, the optical communication system 100 can provide an optical transport network (OTN), which in accordance with the ITU G.709 standard, can implement a hierarchy of abstracted layers, such as, optical transport section (OTS), an optical multiplex section (OMS), an optical channel (OCh), an optical transport unit (OTU), an optical data unit (ODU), and an optical channel payload unit (OPU). The layers allow underlying optical components of the optical communication system 100 to be abstracted, and allow communication trails to be dynamically formed, destroyed and re-routed. For example, the network elements 108 that include optical add/drop multiplexing (OADM) capability and can dynamically adjust channel allocation based on feedback and control messages from the NMS.

The transmissions between stations 102-106 via one or more network elements 108 can be supported by one or more optical channels provided by wavelength-division multiplexing (WDM), for example. The transmissions can be accomplished using one or more optical cables containing one or more optical fiber pairs that can allow for bi-directional communication between the cable landing stations 102-106. The stations 102-16 may include optical equipment for transmitting and receiving WDM optical signals between stations. As described herein, the transmission can be accomplished using CREs 119, 129, 139 positioned within stations 102-106, respectively. The CREs can include, for example, optical components (e.g., optical transceivers), hardware, software, and/or any combination thereof that allows for communication with one or more of the network elements 108. This communication can be over respective bi-directional command/response (CR) telemetry paths terminating between cable stations 102-106 and coupled to one or more the network elements 108. It should be noted that the relationship between the CREs 119, 129, 139 and the network elements 108 can be N:M, where any number of CREs can communicate (e.g., transmit and receive optical telemetry signals) with any number of network elements 108, and vice-versa. Each CR telemetry path can include a dedicated optical channel and/or frequency, although the CR telemetry paths can operate on non-dedicated optical channels, or a mix of both.

The graphical user interfaces (GUIs) 113, 123, 133 can allow a user (not shown in FIG. 1) to interact with the associated network management services and/or perform network management functions via one or more interfaces presented on the GUIs, which can be configured to visualize and allow interaction with various network management functions. Alternatively, or in addition, a remote interface, e.g., a web service, web server (e.g., a hypertext transfer protocol (HTTP) server), and/or any other communication interface can be provided to allow remote operation of one or more components of the stations 102-106. The network management service can perform, for example, continuous long-haul network monitoring, fault detection (e.g., a cable cut or power feed equipment (PFE) failure), proactive maintenance (e.g., firmware upgrades for optical components), alarm management (e.g., from the network elements 108), network topology management (e.g., topology discovery, traffic re-routing, capacity-allocation plans), etc.

A non-limiting example of the optical communication system implementing one or more of the above functionalities is illustrated in co-owned U.S. Patent No. 10,110,466 to Tsaltskan et al., issued on October 23, 2018, and entitled "Optical Communication System with Distributed Wet Plant Manager,".

Referring back to FIG. 1, the optical communication system 100 can include a single active node, e.g., cable landing station 102, which is responsible for handling all incoming requests for routing of signals, processing the data, etc. The standby nodes, e.g., stations 104 and 106, on the other hand, can be inactive and do not handle any requests. However, the stations 104, 106 can be configured to take over the workload from the active node, e.g., station 102, if it failed and/or needed to be manually taken down for maintenance. The standby nodes can be continuously synchronized with the active node, ensuring that they had an up-to-date copy of the data and configurations. The system 100 can be configured to provide redundancy and an increased availability of the system, as the failure of a single node would not result in a system-wide outage.

Using the system 100, when a user submits a request via the GUI service, e.g., via GUI 113, 123, 133, at a specific cable station, the GUI service must first locate the active node and forward the request to it (e.g., a request submitted via GUI 123 can be routed to station 102 via GUI request 122). The active node, i.e., station 102, can then assume the responsibility of identifying the request and determining the appropriate action to take. If, for example, the request involves modifying a dry plant network element, the active node, i.e., station 102, can forward the request to one or more network elements 108. If, for example, the request involves modifying a network element 108, the active node, i.e., station 102, can coordinate CREs 119, 129, 139, and locate the most recent CRE capable of establishing communication with the network element(s) 108. The CRE that successfully connects to the network element(s) 108 can then be utilized as the communication medium to transmit the request to the network element(s) 108.

In a scenario when data communication network (DCN) 110 fails, each node, i.e., stations 102-106, can become active. This can occur because the nodes will not be aware of the existence of any other nodes due to the lack of connection to the DCN 110. Once connection is reestablished, one node, i.e., station 102, can be active, while all other nodes, i.e., stations 104, 106 can become standby. Further, the active node can overwrite configuration, parameters, etc. of the standby nodes, i.e., stations 104, 106. This can prevent any future conflicts and/or inconsistencies in the management of the system 100. It can resolve conflicts by simply overwriting the configuration, parameters, etc. of the standby nodes with information from the active node, i.e., station 102, regardless of the information collected by previously active nodes when connection to the DCN 110 is unavailable.

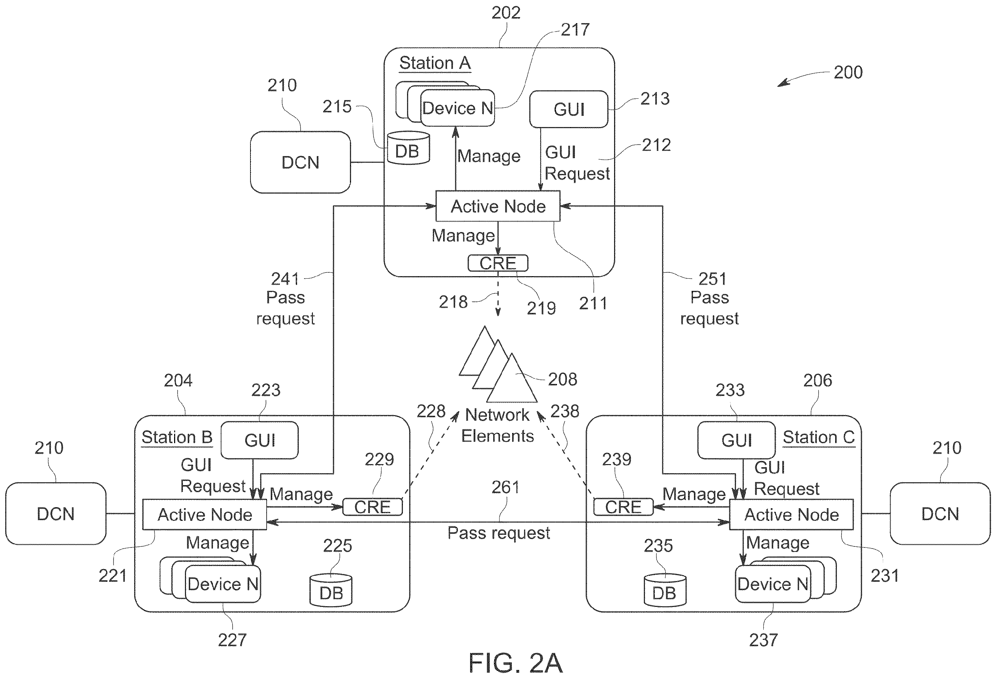

FIGS. 2a-c illustrate an example of an optical communication system 200, according to the current subject matter. The system 200 may incorporate some of the similar components of the optical communication system 100 shown in FIG. 1. However, the system 200 can be provided to provide a peer-to-peer network of nodes, e.g., cable landing stations, where each node active. As can be understood, the system 200 may be configured to incorporate one or more standby nodes, such as, for example, those (e.g., stations 104, 106) shown in FIG. 1.

The system 200 may be configured to have one or more of the following technical benefits. For example, the system may be configured to balance the load between active nodes, which can reduce the need for additional hardware, thereby resulting in cost savings. By distributing the workload evenly across multiple nodes, the system 200 can operate efficiently without requiring unnecessary hardware investments. Moreover, the system 200 can be highly scalable, allowing for addition of extra nodes without increasing operational burden on the existing nodes. This means that the system 200 can handle increasing workloads, user demands, etc. without compromising performance. Further, the system 200 can include a graphical user interface (GUI) that may be located in one or more cable stations, thereby reducing latency and improving user experience. This design ensures that users can access the system's features, functionality, etc. without any delay. Additionally, the system 200 can be configured to implement data synchronization through merging of configuration, transmission parameters, etc. using a timestamp, thereby ensuring that no node has privileges over the other nodes. This can ensure resilience of the system 200 to allow it to continue to operate even in the event of a partial failure and/or outage. Since all nodes in the system 200 are active, there is no need to predefine a particular order of active nodes, which provides flexibility and allows for easy configuration and management of the system 200. Also, the system 200 can be configured to automatically determine possible CRE paths, accounting for ROADM wave plan changes, states of optical switch devices, system topology, etc., thereby allowing the system 200 to adapt to changing conditions and ensuring that the system 200 remains optimized and efficient.

Referring to FIG. 2a, the system 200 may include cable landing stations 202, 204, 206 and one or more network elements 208. The stations 202-106 may be communicatively coupled to the network element(s) 208. A predetermined network topology map may be used to arrange the stations 202-206 and network element(s) 208. Each of the cable landing stations 202-206 may also be communicatively coupled to a data communications network (DCN) 210 (similar to the DCN 110).

As discussed herein, each cable landing station 202-206 may be configured as an active node cable landing station. Thus, each cable landing station may include all configuration, parameters, etc. for handling any requests that may be received from one or more users (not shown in FIG. 2a), such as, for example, determining a shortest and/or least error-prone communication path for transmission of an optical signal (e.g., a telemetry signal, etc.) from one station to another station via one or more network elements 208.

As shown in FIG. 2a, similar to respective components of the system 100 shown in FIG. 1, the cable landing station 202 may include a processing element 211, a graphical user interface 213, a database 215, one or more network/computing devices 217, and a CRE device 219. Similarly, the cable landing station 204 may include a processing element 221, a graphical user interface 223, a database 225, one or more network/computing devices 227, and a CRE device 229, and cable landing station 206 may include a processing element 231, a graphical user interface 233, a database 235, one or more network/computing devices 237, and a CRE device 239.

Further, one or more components of the system 200, e.g., processing elements 211, 221, 231, may include any combination of hardware and/or software. In some embodiments, one or more components of the system may be disposed on one or more computing devices, such as, server(s), database(s), personal computer(s), laptop(s), cellular telephone(s), smartphone(s), tablet computer(s), virtual reality devices, and/or any other computing devices and/or any combination thereof. In some example embodiments, one or more components of the system may be disposed on a single computing device and/or may be part of a single communications network. Alternatively, or in addition to, such devices may be separately located from one another. A device may be a computing processor, a memory, a software functionality, a routine, a procedure, a call, and/or any combination thereof that may be configured to execute a particular function associated with interface and/or document certification processes disclosed herein.

One or more components of the system 200 may include network-enabled computers. As referred to herein, a network-enabled computer may include, but is not limited to a computer device, or communications device including, e.g., a server, a network appliance, a personal computer, a workstation, a phone, a smartphone, a handheld PC, a personal digital assistant, a thin client, a fat client, an Internet browser, or other device. One or more components of the system also may be mobile computing devices, for example, an iPhone, iPod, iPad from Apple® and/or any other suitable device running Apple's iOS® operating system, any device running Microsoft's Windows®. Mobile operating system, any device running Google's Android® operating system, and/or any other suitable mobile computing device, such as a smartphone, a tablet, or like wearable mobile device.

One or more components of the system 200 may include a processor and a memory, and it is understood that the processing circuitry may contain additional components, including processors, memories, error and parity/CRC checkers, data encoders, anti-collision algorithms, controllers, command decoders, security primitives and tamper-proofing hardware, as necessary to perform the interface and/or document certification functions described herein. One or more components of the system may further include one or more displays and/or one or more input devices. The displays may be any type of devices for presenting visual information such as a computer monitor, a flat panel display, and a mobile device screen, including liquid crystal displays, light-emitting diode displays, plasma panels, and cathode ray tube displays. The input devices may include any device for entering information into the user's device that is available and supported by the user's device, such as a touchscreen, keyboard, mouse, cursor-control device, touchscreen, microphone, digital camera, video recorder or camcorder. These devices may be used to enter information and interact with the software and other devices described herein.

One or more components of the system 200 may execute one or more applications, such as software applications, that enable, for example, network communications with one or more components of system and transmit and/or receive data.

One or more components of the system 200 may include and/or be in communication with one or more servers via one or more networks and may operate as a respective front-end to back-end pair with one or more servers. One or more components of the system may transmit, for example from a mobile device application (e.g., executing on one or more user devices, components, etc.), one or more requests to one or more servers. The requests may be associated with retrieving data from servers. The servers may receive the requests from the components of the system. Based on the requests, servers may be configured to retrieve the requested data from one or more storage locations. Based on receipt of the requested data from the databases, the servers may be configured to transmit the received data to one or more components of the system, where the received data may be responsive to one or more requests.

The system 200 may include one or more networks, a storage source, and/or any other computing components. In some embodiments, networks may be one or more of a wireless network, a wired network or any combination of wireless network and wired network and may be configured to connect the components of the system and/or the components of the system to one or more servers. For example, the networks may include one or more of a fiber optics network, a passive optical network, a cable network, an Internet network, a satellite network, a wireless local area network (LAN), a metropolitan area network (MAN), a wide area network (WAN), a virtual local area network (VLAN), an extranet, an intranet, a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11b, 802.15.1, 802.11n and 802.11g, Bluetooth, NFC, Radio Frequency Identification (RFID), Wi-Fi, and/or any other type of network and/or any combination thereof.

In addition, the networks may include, without limitation, telephone lines, fiber optics, IEEE Ethernet 802.3, a wide area network, a wireless personal area network, a LAN, or a global network such as the Internet. Further, the networks may support an Internet network, a wireless communication network, a cellular network, or the like, or any combination thereof. The networks may further include one network, or any number of the exemplary types of networks mentioned above, operating as a stand-alone network or in cooperation with each other. The networks may utilize one or more protocols of one or more network elements to which they are communicatively coupled. The networks may translate to or from other protocols to one or more protocols of network devices. The networks may include a plurality of interconnected networks, such as, for example, the Internet, a service provider's network, a cable television network, corporate networks, such as credit card association networks, and home networks.

The system 200 may include one or more servers, which may include one or more processors that may be coupled to memory. Servers may be configured as a central system, server or platform to control and call various data at different times to execute a plurality of workflow actions. Servers may be configured to connect to the one or more databases. Servers may be incorporated into and/or communicatively coupled to at least one of the components of the system.

Further, one or more components of the system 200 may be configured to execute one or more actions using one or more containers. In some embodiments, each action may be executed using its own container. A container may refer to a standard unit of software that may be configured to include the code that may be needed to execute the action along with all its dependencies. This may allow execution of actions to run quickly and reliably.

The processing element 211 of the station 202 may be configured to receive one or more requests 212 from the graphical user interface 213 (e.g., for transmission of optical signals) using one or more topology maps that may be stored in the database 215. Similar requests may be received by processing elements of stations 204 and/or 206. To process such request, the processing element 211 may be configured to access CRE device 219 to coordinate transmission of the request via one or more network elements 208 communicatively coupled to the CRE device 219 via optical communication cable 218. The network elements 208 may also be communicatively coupled to CRE devices 229, 239 using one or more optical communication cables 228, 238, respectively.

The processing element 211 may be configured to use station configuration/routing/etc. parameter(s), setting(s), network topology map(s), etc. stored by the station 202 in the database 215 to determine one or more communication paths for routing of one or more optical signals (e.g., telemetry signals, etc.) resulting from the received request. For example, the processing element 211 may be configured to select a nominally shortest and/or least error prone data telemetry path from the determined communication paths. Once the paths are selected, network elements 208 (and/or any of the other components, such as, for example, CREs 219, 229, 239, etc.) determined to be positioned in such communication path may be appropriately configured for routing of optical signals (e.g., telemetry signals, etc.). Once the optical signal(s) are routed, such configured elements and/or components may be re-configured back to their previous configurations (e.g., initial configurations, configurations prior to routing of signals, etc.). The processing element 211 may update network topology maps as a result of such optical signal(s) routing(s) and/or using real-time and/or near real-time data and/or notifications received from one or more network elements 208.

Similar to network elements 108, the network elements 208 may be disposed on the sea floor and/or on land for communicatively coupling cable landing stations 202-206. One or more of stations 202-206 may be disposed on-land (e.g., a beach landing), undersea, at sea (e.g., on an oil and/or drilling platform, and/or any other man-made structure, etc.),

and/or positioned in any desired location.

For routing of one or more optical signals (e.g., telemetry signals, etc.), graphical user interfaces (GUIs) 213, 223, 233 of respective stations 202-206 may be used to receive an appropriate request for routing of such signals. Requests may be received from one or more users (not shown in FIG. 2a), where user(s) may include computing entit(ies), human user(s), and/or any other type of users. The user(s) may interact with the GUIs 213, 223, 233 for the purposes of submission of the request. Alternatively, or in addition, a remote interface, e.g., a web service, web server (e.g., a hypertext transfer protocol (HTTP) server), and/or any other communication interface can be provided to allow remote operation of one or more components of the stations 202-206. Once the requests for routing of optical signals are received, the processing elements 211, 221, and/or 231 may be configured to interact with one another using one or more requests 241 (exchanged between processing elements 211, 221), 251 (exchanged between elements 211, 231), and/or 261 (between elements 221, 231). The requests may be bidirectional and/or unidirectional. The requests, 241, 251, 261 may include various data, information, routing parameters (e.g., frequency, etc.) associated with stations 202-206, network element(s) 208, optical path, etc. that may be needed for fulfillment of the request(s) for transmission of optical signals. For example, a request for routing of an optical signal (e.g., telemetry signal, etc.) may be submitted via GUI 213 of the station 202 indicating that station 204 is a destination station. The processing element 211 of the station 202 may determine one or more optical transmission paths for routing the signals (e.g., telemetry signal, etc.) and/or select a specific optical path (e.g., least-error prone optical path, shortest optical path, etc.). Once optical path has been identified, the processing element 211 may configure the CRE 219 and one or more network elements 208 that are determined to be in that selected optical path for transmission of the optical signal. Alternatively, or in addition, the processing element 211 may also communicate with the processing element 223 of the station 206 via one or more requests 241 to indicate routing of the optical signal and/or provide information about the selected optical path, configuration information, etc. The optical signal may then be routed from the CLS 202 to the configured optical elements 208 via optical cable(s) 218 to the CLS 223 via optical cable(s) 228, and then may be processed by the processing element 223. Alternatively, or in addition, signals may be routed between CREs and/or any other components of the system 200. Once the optical signal has been routed, configurations of any of the elements in the selected optical path may (e.g., optionally) be returned to pre-routing configurations. Routing of optical signals from other stations may be accomplished in a similar manner.

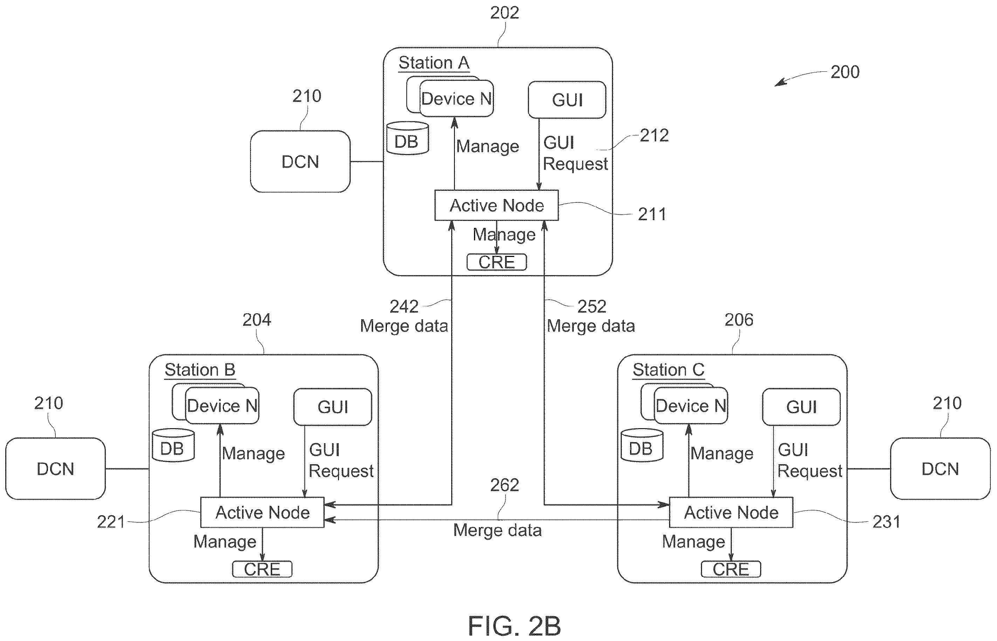

The peer-to-peer configuration of the system 200 may be configured to decentralize the management platform between two or more active nodes (e.g., cable stations or nodes 202-206). Each node 202-206 (or peer) may be configured to have the same privileges and/or responsibilities, and all peers may contribute to the network's functionality and performance. Further, any users may maintain control over their devices and data, without relying on intermediaries. Moreover, in the event the data communication network (DCN) 210 is down, each node 202-206 remains active and might not be aware of the existence of any other nodes 202-206. As shown in FIG. 2b, when the connection with the DCN 210 is reestablished, the status of each node 202-26 will not change, whereby any data and/or configurations may be merged based on a timestamp (e.g., a timestamp corresponding to the time of disconnection to DCN 210, a timestamp corresponding to the time when one or more of the nodes 202-206 is connected to DCN 210). Any changes made to the system 200 during the DCN 210 outage may be incorporated into the system 200, with the most recent changes taking precedence. This approach may ensure that the system 200 is up-to-date and accurate, even in the event of a DCN 210 failure. The data may be merged among nodes 202-206 using communications 242 (between nodes 202 and 204), 252 (between nodes 202 and 206), and 262 (between nodes 204 and 206).

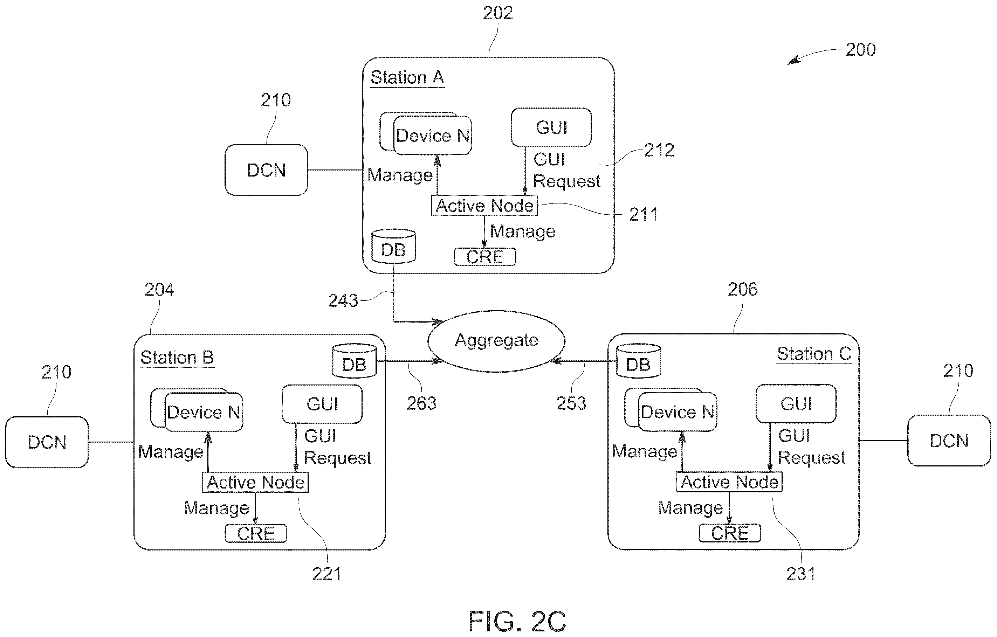

Instead of statically replicating the databases (e.g., databases 215, 225, 235) for network elements 208, any data, information, configuration, etc. in the system 200 may be dynamically aggregated during normal operations, as shown in FIG. 2c. Aggregation may be accomplished using data transmissions 243 (from station 202), 253 (from station 206) and/or 263 (from station 204). The aggregated data may be stored in one or more databases 215, 225, 235 and/or in any desired storage location.

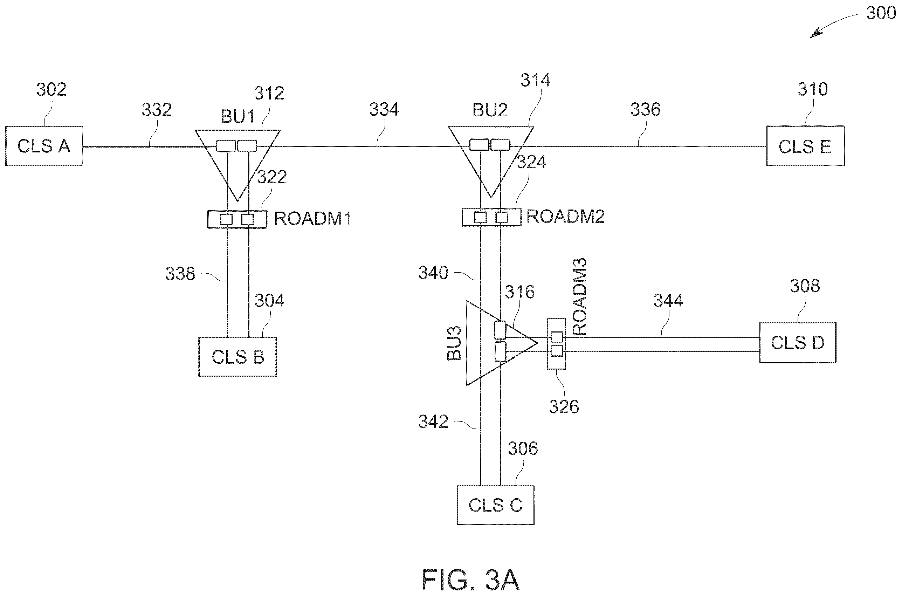

FIGS. 3a-b illustrate an example optical communication system 300, according to the current subject matter. The system 300 may be used for routing of optical signal between one or more cable landing stations using one or more optical cables that may include one or more fiber pairs. As shown in FIG. 3a, the system 300 may include a cable landing station A (CLS A) 302, a cable landing station B (CLS B) 304, a cable landing station C (CLS C) 306, a cable landing station D (CLS D) 308, and a cable landing station E (CLS E) 310. One or more or each cable landing station 302-310 may include the structure and/or components (including a processing element and CRE) shown and described in connection with FIGS. 2a-c.

The cable landing stations may be communicatively coupled using one or more branching units (BU) BU1 312, BU2 314, and BU3 316. One or more reconfigurable optical add drop multiplexers (ROADM) may be positioned between one or more cable landing stations and branching units, where ROADMs may be configured to block optical signals (e.g., telemetry signals, etc.) from CRE of a particular cable landing station, so that CREs would not be able to control operation of the branching unit without a ROADM wave plan change. For example, ROADM 1 322 may be communicatively coupled to the branching unit 312; ROADM 2 324 may be communicatively coupled to the branching unit 314; and ROADM 3 326 may be communicatively coupled to the branching unit 316.

Further, as shown in FIG. 3a, the cable landing station A 302 may be communicatively coupled to the branching unit 312 using an optical cable 332. The cable landing station B 304 may be communicatively coupled to the branching unit 312 using an optical cable 338, where ROADM 322 is positioned between the branching unit 312 and the cable landing station 304 to block optical signals (e.g., telemetry signals, etc.) from CRE of the branching unit 312 by default. The branching unit 312 may be communicatively coupled to the branching unit 314 using optical cable 334. The branching unit 314 may be communicatively coupled to the cable landing station E 310 using optical cable 336. The ROADM 324 may be positioned between the branching unit 314 and the branching unit 316, which are communicatively coupled using optical cable 340, to, by default, block optical signals (e.g., telemetry signals, etc.) into the branching unit 314 being routed from one or more of the cable landing stations 306 and/or 308 via the branching unit 316. The branching unit 316 may be communicatively coupled to the cable landing station 306 using an optical cable 342 and to cable landing station 308 using an optical cable 344. The ROADM 326 may, by default, block optical signals (e.g., telemetry signals, etc.) being routed from the cable landing station 308 to the branching unit 316.

The arrangement shown in FIG. 3a is provided for illustrative, non-limiting purposes. As can be understood, any desired arrangement of cable landing stations, branching units, ROADMs, and/or any other components of the communication system 300 are possible.

Use of ROADMs 322-326 to block routing of optical signals into respective branching unit from cable landing stations, as shown in FIG. 3a, may ensure that the optical communication system 300 is operating efficiently and effectively, with the ROADMs only allowing optical signals (e.g., telemetry signals, etc.) to pass through when necessary. The use of ROADMs 322-326 may also enable the system 300 to be easily reconfigured and/or upgraded, as the ROADMs 322-326 may be programmed to allow new signals and/or connections to be established.

Conventional optical communication systems are typically unable to perform these steps in an effective, efficient, and/or error-free manner. For example, in such systems, if the only CRE available at a particular time is in the cable landing station 308, in order for it to control branching unit 314, a system operator must manually log into the system, change wave plans of ROADM 2 324 and ROADM 326 to allow the passage of CRE signals (e.g., one or more telemetry signals over one or more telemetry channels) from the cable landing station 308, send commands to branching unit 314 using the CRE of the cable landing station 308, and then change the wave plan back.

To resolve this, the system 300 may be configured to automatically calculate ROADM wave plans on the path between the CRE and network elements (e.g., branching units 312-316) and change them accordingly. In order to do so, the system 300 may be configured to generate a system topology map for one or more system segments (e.g., cable landing station 302 to cable landing station 304; cable landing station 304 to cable landing station 310, etc.). The system topology map may be stored in a storage location (e.g., memory, database, etc.) and may be used for tracing of optical telemetry paths between various system components. The system 300 may use the topology map (e.g., together with the branching units' optical switch component(s) and/or optical channel cross-connect(s) in ROADM(s)) to determine whether a particular telemetry path is possible or not.

The system 300 may execute a searching algorithm for all possible CRE telemetry paths to controllable undersea network elements (e.g., branching units, ROADMs, etc.). For instance, in order to control operation of the branching unit 314, the system 300 may determine that the path may traverse optical cable 336 and may require 0 hops 352 for the CRE(s) in cable landing station 310 to communicate (path through ROADM) with branching unit 314. However, to control operation of the branching unit 314 from cable landing station 308, the system 300 may determine that the path may traverse optical cable 344, ROADM 326, branching unit 316, cable 340, and ROADM 324, and may require 2 hops 358 for the CRE(s) in cable landing station 308 to communicate with the branching unit 314. Similarly, in order to control operation of the branching unit 316, the system 300 may determine that the path may traverse optical cable 336, branching unit 314, and ROADM 324 and may require 1 hop 356 for the CRE(s) in cable landing station 310 to communicate with branching unit 316. Likewise, to control operation of the branching unit 312, the system 300 may determine that the path may traverse optical cable 336, branching unit 314, and optical cable 334 and may require 1 hop 354 for the CRE(s) in cable landing station 310 to communicate with branching unit 312. As can be understood, the number of hops and/or complexity of the path may be determined based on an origination point from which control of a particular network element (e.g., branching unit, ROADM, etc.) will be performed, where complexity may increase with a number of network elements that may be positioned on the path.

The searching algorithm executed by the system 300 to determine a specific path for routing of an optical signal (e.g., telemetry signal, etc.) through branching unit 314 may be initiated by setting branching unit 314 as a starting point (e.g., corresponding to 0 hops). Then, the system 300 may identify one or more ROADMs directly communicatively coupled to the branching unit 314 as 1-hop ROADMs. This set of 1-hop ROADMs may include all ROADMs that may have a direct optical fiber connection with the branching unit 314, which, in this case, ROADM 324.

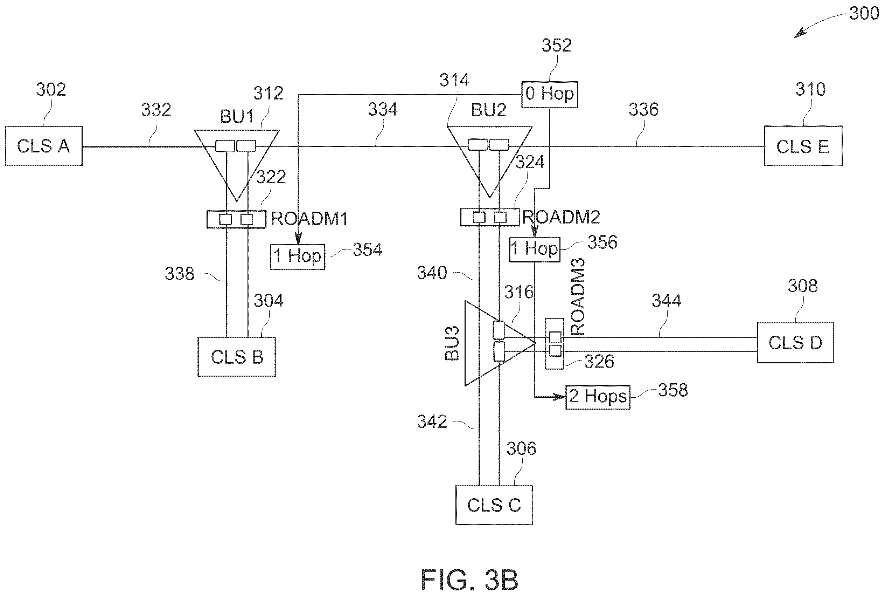

Once the 1-hop ROADMs are identified, the system 300 may be configured to identify ROADMs that may be communicatively coupled to the 1-hop ROADMs (i.e., ROADM 324). These ROADMs may then be designated as 2-hop ROADMs (as shown in FIG. 3, ROADM 326). To identify 2-hop ROADMs, the system 300 may examine connections of each 1-hop ROADM to determine the ROADMs that may be reachable within two hops from branching unit 314. The searching process may continue in a similar manner for 3 and more hop ROADMs. By repeating this process, the system 300 may identify all ROADMs that may be reachable from the branching unit 314 within a specified number of hops and CREs directly connected to those n-hop repeaters will be n-hop CREs. In general, with the increase of number of hops, the complexity of using the CRE to control the branching unit 314 may increase.

The complexity of constructing a CRE path may be affected by one or more factors, which may include existing conditions of branching unit optical switch states, ROADM wave plans, CRE frequencies that may be required to be configurable, and/or any other factors. This may add to the complexity of determining CRE paths. To overcome this challenge, the system 300 may execute a process that may account for the states of all network elements (e.g., network element 208) and/or CRE frequencies to rank the possible CRE paths from simplest (e.g., shortest, least prone to error, etc.) to most difficult. By executing this process, the system 300 may consider factors, such as, for example, but not limited to, the number of hops required, the distance between the nodes (e.g., cable landing stations), the type of transmission equipment used, and the current state of the network. The system 300 may determine such paths using the following:

$$t = \sum_{i=1}^{n}\left(t_{p,une_i} + 2t_{t,une_i}\right) \tag{1}$$

where $t$ is an overall estimated time cost to control one or more target network element(s) $n$, $t_{p,une_i}$ is a time that a processing element (e.g., in one or more cable landing stations) may need to process the command at a network element i (e.g., a temporary change of ROADM's wave plan), $t_{t,une_i}$ is a transmission time for commands to send from the CRE to reach the network element i. A round trip transmission time may also add a factor of 2 to the equation (1). Moreover, if the network element i is a branching unit and the optical switch of the branching unit is in a state that blocks the path, the processing time $t_{p,une_i}$ may become an infinity, thereby making the following calculations unnecessary.

Using equation (1) to determine time cost, Table 1 illustrates exemplary possible CRE paths and relative time costs.

Table 1. Possible CRE paths and Time Costs.

| Network Element to Control | CRE | Estimated Time | Order |
|---|---|---|---|
| Branching unit 314 | CLS A.CRE1 | 2.80 | 2 |
| | CLS B.CRE1 | 4.80 | 4 |
| | CLS C.CRE1 | 3.60 | 3 |
| | CLS D.CRE1 | 6.20 | 5 |
| | CLS E.CRE1 | 1.20 | 1 |

In the above table "CLS A.CRE1" corresponds to a CRE device of the cable landing station 302, "CLS B,CRE1" corresponds to a CRE device of the cable landing station 304; etc. The estimated time may be determined using equation (1). The system 300 may be configured to assess each possible CRE path based on the estimated time cost (for example, in the order of: CLS E.CRE1, CLS A.CRE1, CLS C.CRE1, CLS B.CRE1, CLS D.CRE1). The assessment may be executed using a trial-and-error approach to identify the simplest path that meets specific requirements of the system 300. This process may be repeated until the simplest CRE path is determined. For example, given the system requirements, the simplest path may be a path that minimizes a number of wave plans to modify, a number of hops and/or the distance between the nodes (e.g., cable landing stations, etc.). By using the above process, the system 300 may efficiently and effectively determine the simplest CRE path while ensuring optimal system performance and minimizing the risk of errors or failures.

The above discussion of the path determination process executed by the system 300 is presented herein for illustrative, non-limiting purposes. As can be understood, the process may be executed using any processing element of any of the components of the system 300.The processing element that may perform the above process may be located within a particular cable landing station (e.g., processing element 211 of cable landing station 202, as shown in FIG. 2a). Selection of a processing element to perform this process may be determined based on one or more of the origination and/or destination points (e.g., cable landing stations) and/or specific network elements (e.g., branching units, ROADMs, etc.) that may need to be traversed and/or modified and/or control for transmission of an optical signal (e.g., telemetry signal, etc.). For example, to transmit a signal from cable landing station 302 to cable landing station 308, the processing element of the cable landing station 302 may determine that it may need to control operations of all branching units 312-316 and ROAMS 324, 326. Any other arrangements are possible. Further, alternatively, or in addition, an external processing element communicatively coupled to the system 300 may be configured to execute the above process.

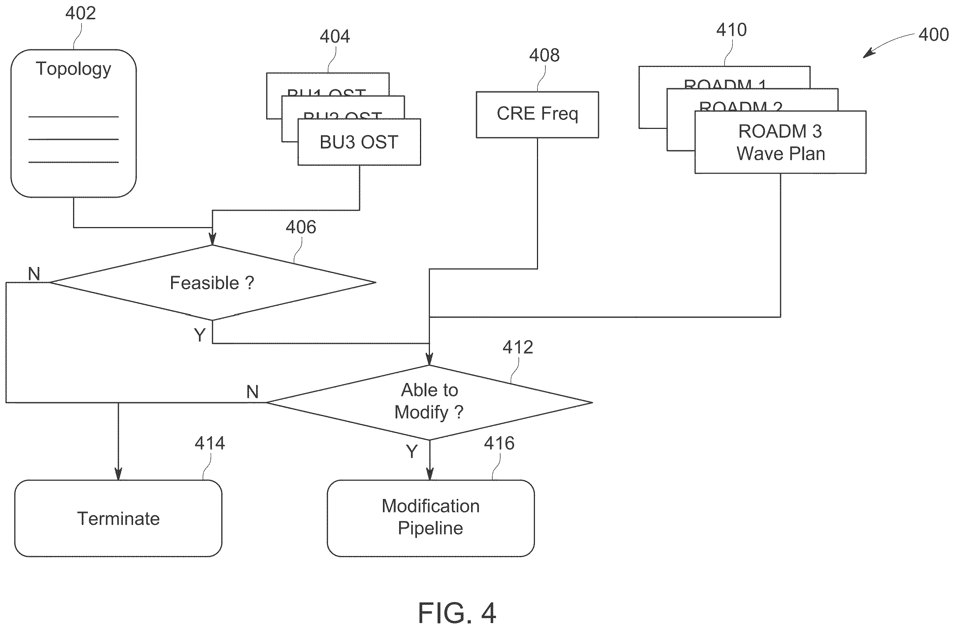

FIG. 4 illustrates a process 400 that may be executed by one or more components of the system 300 for determining a CRE path from between one or more components of the system 300, according to the current subject matter. The process 400 may be configured to account for the complexity of constructing a CRE path by analyzing data, information, etc. related to the system 300's topology, branching unit optical switch tray states, existing ROADM wave plans, and/or any other information. As stated above, any processing element (e.g., internal to one or more components of the system 300, and/or externally communicatively coupled to the system 300) may execute the process 400.

At 406, the system 300 may be configured to receive various data and/or information related to the system 300, which may include system topology 402 and one or more branching unit optical switch states 404 and determine whether any of the CRE paths (as determined using the process discussed with regard to FIGS. 3a-b) are feasible. If no paths are feasible, the process 400 may terminate, at 414. Otherwise, the process may proceed to 412 to determine whether modification of ROADM wave plans may be needed.

At 412, the system 300 may be configured receive further data and/or information, which may include CRE frequencies 408 and one or more ROADM wave plans 410. Using equation (1), the system 300 may be configured to determine time costs associated with each CRE path and rank the paths accordingly. Based on such determinations, the system 300 may determine whether modification of any of the network elements (e.g., branching units, ROAMs, etc.) is possible and/or whether such modifications may be made. If not, the process 400 may terminate, at 414. Otherwise, the system 300 may select a specific CRE path and modify the network elements in such path accordingly, at 416.

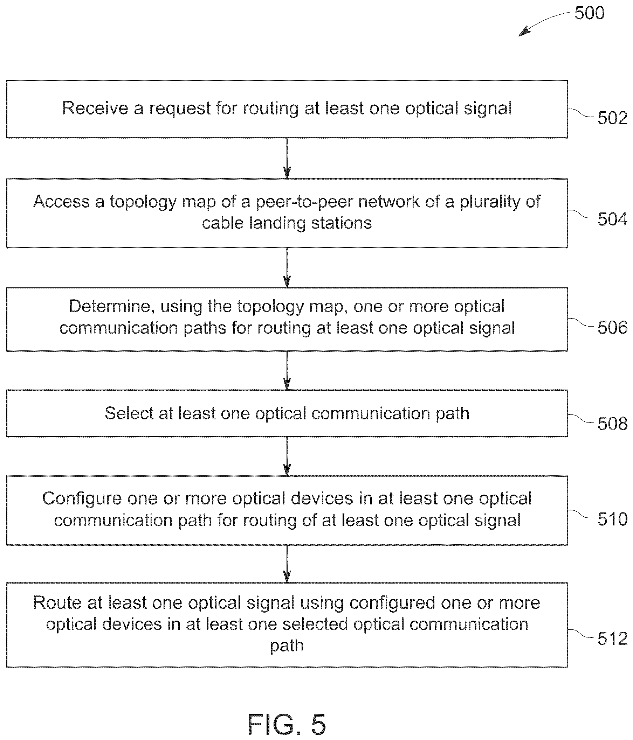

FIG. 5 example process 500 for determining a communication path in an optical communication system for transmission of an optical signal, according to the current subject matter. The systems 200 and/or 300, as shown and described in connection with FIGS. 2a-3b, may be used to execute process 500. For example, one or more processing elements of cable landing stations may execute process 500. Alternatively, or in addition, one or more external processing elements may execute process 500. As discussed herein, the optical communication system that may execute the process 500 may include a plurality of cable landing stations (e.g., stations 202-206, stations 302-310) configured to be communicatively coupled using one or more optical communication cables in a peer-to-peer network to route one or more optical communication signals using one or more network elements (e.g., network elements 208, BU1-BU3 312-316; ROADMs 322-326)). Each cable landing station may include a management device (e.g., processing element(s) 211, 221, 231) configured to determine one or more optical communication paths (e.g., CRE paths) for routing one or more optical communication signals and a command/response optical device (e.g., CRE device(s) 219, 229, 239) communicatively coupled to the management device for routing the one or more optical communication signals in accordance with the optical communication path.

At 502, a request for routing at least one optical signal (e.g., telemetry signal, etc.) may be received by the system (e.g., cable landing station 302). At 504, a topology map (e.g., topology map 402) of the peer-to-peer network of a plurality of cable landing stations may be accessed, and one or more optical paths (e.g., telemetry paths, etc.) for routing at least one optical signal (e.g., telemetry signal, etc.) may be determined using the topology map, at 506. Various parameters, such as CRE frequencies 408 and/or ROADM wave plans 410 may be accounted for when determining the path.

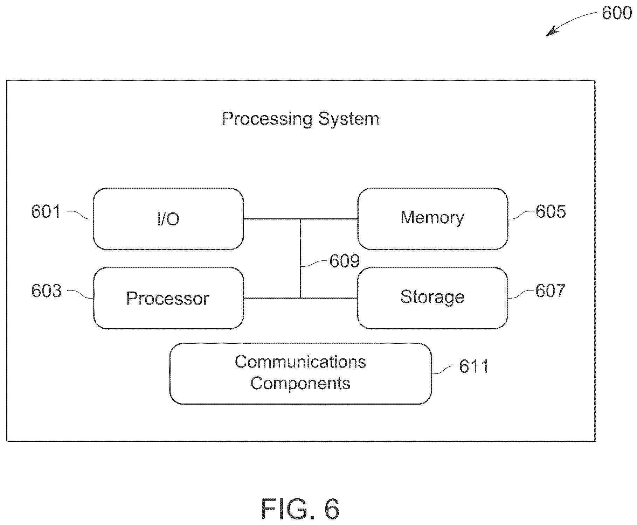

At 508, at least one optical communication path may be selected. The selection may be based on a ranking of the paths, which may be dependent on an ability to modify one or more network elements, time costs involved, error-proneness of the path, etc. Once the path is selected, one or more optical devices (e.g., branching units, ROADMs, etc.) in the optical communication path may be configured for routing of the optical signals (e.g., telemetry signal, etc.), at 510. After configuring the devices, the optical signal (e.g., telemetry signal, etc.) may be routed using the configured optical devices in the selected optical communication path, at 512. An example of a processing system that may execute the process 500 is illustrated in FIG. 6.

As shown in FIG. 6, the processing system 600 may include an input/output (I/O) device 601, a processor 603, a memory 605, a storage 607, and one or more communication components 611. Each of the components 601-1107 may be interconnected using a system bus 609. The processor 603 may be configured to process instructions for execution within system 600. The processor 603 may be a single-threaded processor. Alternatively, or in addition, the processor 603 may be a multi-threaded processor. The processor 603 may be further configured to process instructions stored in the memory 605 and/or in the storage 607, including, but not limited to, receiving and/or sending information through the I/O device 601. The memory 605 may store information within the system 600. The memory 605 may be a computer-readable medium. Alternatively, or in addition, the memory 605 may be a volatile memory unit. The memory 605 may be a non-volatile memory unit. The storage 607 may be capable of providing mass storage for the system 600. The storage 607 may be a computer-readable medium. Alternatively, or in addition, the storage 607 may be a floppy disk device, a hard disk device, an optical disk device, a tape device, non-volatile solid-state memory, or any other type of storage device. The I/O device 601 may provide input/output operations for the system 600. The I/O device 601 may include a keyboard and/or pointing device. Alternatively, or in addition, the I/O device 601 may include a display unit for displaying graphical user interfaces.

One or more components of the system 600 may include any combination of hardware and/or software. One or more components of the system 600 may be disposed on one or more computing devices, such as, server(s), database(s), personal computer(s), laptop(s), cellular telephone(s), smartphone(s), tablet computer(s), virtual reality devices, and/or any other computing devices and/or any combination thereof. One or more components of the system 600 may be disposed on a single computing device and/or may be part of a single communications network. Alternatively, or in addition to, such services may be separately located from one another.

The system 600's one or more components may include network-enabled computers. As referred to herein, a network-enabled computer may include, but is not limited to a computer device, or communications device including, e.g., a server, a network appliance, a personal computer, a workstation, a phone, a smartphone, a handheld PC, a personal digital assistant, a thin client, a fat client, an Internet browser, or other device. One or more components of the system 600 also may be mobile computing devices, for example, an iPhone, iPod, iPad from Apple® and/or any other suitable device running Apple's iOS® operating system, any device running Microsoft's Windows®. Mobile operating system, any device running Google's Android® operating system, and/or any other suitable mobile computing device, such as a smartphone, a tablet, or like wearable mobile device.

One or more components of the system 600 may include a processor and a memory, and it is understood that the processing circuitry may contain additional components, including processors, memories, error and parity/CRC checkers, data encoders, anti-collision algorithms, controllers, command decoders, security primitives and tamper-proofing hardware, as necessary to perform the functions described herein. One or more components of the system 600 may further include one or more displays and/or one or more input devices. The displays may be any type of devices for presenting visual information such as a computer monitor, a flat panel display, and a mobile device screen, including liquid crystal displays, light-emitting diode displays, plasma panels, and cathode ray tube displays. The input devices may include any device for entering information into the user's device that is available and supported by the user's device, such as a touchscreen, keyboard, mouse, cursor-control device, touchscreen, microphone, digital camera, video recorder or camcorder. These devices may be used to enter information and interact with the software and other devices described herein.

One or more components of the system 600 may execute one or more applications, such as software applications, that enable, for example, network communications with one or more components of system 600 and transmit and/or receive data.

One or more components of the system 600 may include and/or be in communication with one or more servers via one or more networks and may operate as a respective front-end to back-end pair with one or more servers. One or more components of the system 600 may transmit, for example, from a mobile device application (e.g., executing on one or more user devices, components, etc.), one or more requests to one or more servers. The requests may be associated with retrieving data from servers. The servers may receive the requests from the components of the system 600. Based on the requests, servers may be configured to retrieve the requested data from one or more databases. Based on receipt of the requested data from the databases, the servers may be configured to transmit the received data to one or more components of the system 600, where the received data may be responsive to one or more requests.

The system 600 may include and/or be communicatively coupled to one or more networks. Networks may be one or more of a wireless network, a wired network or any combination of wireless network and wired network and may be configured to connect the components of the system 600 and/or the components of the system 600 to one or more servers. For example, the networks may include one or more of a fiber optics network, a passive optical network, a cable network, an Internet network, a satellite network, a wireless local area network (LAN), a metropolitan area network (MAN), a wide area network (WAN), a virtual local area network (VLAN), an extranet, an intranet, a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11b, 802.15.1, 802.11n and 802.11g, Bluetooth, NFC, Radio Frequency Identification (RFID), Wi-Fi, and/or any other type of network and/or any combination thereof.

In addition, the networks may include, without limitation, telephone lines, fiber optics, IEEE Ethernet 802.3, a wide area network, a wireless personal area network, a LAN, or a global network such as the Internet. Further, the networks may support an Internet network, a wireless communication network, a cellular network, or the like, or any combination thereof. The networks may further include one network, or any number of the exemplary types of networks mentioned above, operating as a stand-alone network or in cooperation with each other. The networks may utilize one or more protocols of one or more network elements to which they are communicatively coupled. The networks may translate to or from other protocols to one or more protocols of network devices. The networks may include a plurality of interconnected networks, such as, for example, the Internet, a service provider's network, a cable television network, corporate networks, and home networks.

The system 600 may include and/or be communicatively coupled to one or more servers, which may include one or more processors that maybe coupled to memory. Servers may be configured as a central system, server or platform to control and call various data at different times to execute a plurality of workflow actions. Servers may be configured to connect to the one or more databases. Servers may be incorporated into and/or communicatively coupled to at least one of the components of the system 600.

The various elements of the components as previously described with reference to FIGS. 1-6 may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an implementation is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects may be implemented by representative instructions stored on a machine-readable medium which represents various logic within the processor, which when read by a machine causes the machine to fabricate logic to perform the techniques described herein. Such representations, known as "IP cores", may be stored on a tangible, machine readable medium and supplied to various customers or manufacturing facilities to load into the fabrication machines that make the logic or processor. Some may be implemented, for example, using a machine-readable medium or article which may store an instruction or a set of instructions that, if executed by a machine, may cause the machine to perform a method and/or operations.. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writable or rewritable media, digital or analog media, hard disk, floppy disk, Compact Disk Read Only Memory (CD-ROM), Compact Disk Recordable (CD-R), Compact Disk Rewritable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the exemplary devices shown in the block diagrams described above may represent one functionally descriptive example. Accordingly, division, omission or inclusion of block functions depicted in the accompanying figures does not infer that the hardware components, circuits, software and/or elements for implementing these functions would necessarily be divided, omitted, or included.

At least one computer-readable storage medium may include instructions that, when executed, cause a system to perform any of the computer-implemented methods described herein.

In one aspect, an optical communication system may include a plurality of cable landing stations configured to be communicatively coupled using one or more optical communication cables in a peer-to-peer network for routing of one or more optical communication signals using one or more network elements; each cable landing station in the plurality of cable landing stations includes a management device configured to determine one or more optical communication paths for routing the one or more optical communication signals; a command/response optical device communicatively coupled to the management device for routing the one or more optical signals (e.g., telemetry signals, etc.) in accordance with the optical communication path; wherein, in response to receiving a request for routing at least one optical signal (e.g., telemetry signal, etc.) in the one or more optical communication signals, the management device of each cable landing station is configured to determine at least one optical communication path in the one or more optical communication paths for routing the at least one optical signal (e.g., telemetry signal, etc.) in accordance with a topology map of the peer-to-peer network of the plurality of cable landing stations.

The system may also include wherein each cable landing station includes a storage location for storing the topology map of the peer-to-peer network.

The system may also include wherein determination of the at least one optical communication path includes identifying at least one of: at least one network element in the one or more network elements, at least one cable landing station in the plurality of cable landing stations, and any combination thereof; configuring, using one or more routing parameters, one or more command/response optical devices of respective cable landing stations for routing of the at least one optical signal (e.g., telemetry signal, etc.) from first configurations of the respective one or more command/response optical devices to second configurations of the respective one or more command/response optical devices; and determining, based on the identifying and the configuring, the at least one optical communication path.

The system may also include wherein the one or more command/response optical devices of respective cable landing stations are reconfigured from the second configurations to the first configurations subsequent to routing of the at least one optical signal (e.g., telemetry signal, etc.).

The system may also include wherein each cable landing station in the plurality of cable landing stations is configured as an active cable landing station.

The system may also include wherein the plurality of cable landing stations is communicatively coupled to a data communication network, wherein the data communication network is configured to route one or more data signals using the peer-to-peer network of the cable landing stations.

The system may also include wherein configurations of the management device and the command/response optical device of each cable landing station are determined based on a timestamp associated with connection of the data communication network to the peer-to-peer network of the cable landing stations.

The system may also include wherein each cable landing station in the plurality of cable landing stations is configured to merge configurations of its management device and the command/response optical device with one or more configurations of management devices and the command/response optical devices of at least another cable landing station in the plurality of cable landing stations based on the timestamp.

The system may also include wherein the one or more network elements include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof.

In one aspect, an optical communication apparatus may include a management device configured to determine one or more optical communication paths for routing one or more optical signals (e.g., telemetry signals, etc.) using a topology map of a peer-to-peer network of a plurality of cable landing stations; a command/response optical device communicatively coupled to the management device for routing the one or more optical signals (e.g., telemetry signals, etc.) in accordance with the optical communication path; wherein, in response to receiving a request for routing at least one optical signal (e.g., telemetry signal, etc.) in the one or more optical signals (e.g., telemetry signals), the management device is configured to determine, using the topology map, at least one optical communication path in the one or more optical communication paths for routing the at least one optical signal (e.g., telemetry signal, etc.) to at least another cable landing station in the peer-to-peer network.

The apparatus may also include wherein determination of the at least one optical communication path includes identifying at least one of: at least one network element in one or more network elements, the another cable landing station, and any combination thereof; configuring, using one or more routing parameters, the command/response device and another command/response optical device of the another cable landing station for routing of the at least one optical signal (e.g., telemetry signal, etc.) from first respective configurations of the command/response device and another command/response optical device to second respective configurations of the command/response device and another command/response optical device; and determining, based on the identifying and the configuring, the at least one optical communication path.

The apparatus may also include wherein the one or more network elements include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof.

The apparatus may also include wherein the command/response device and another command/response optical device are reconfigured from the second respective configurations to the first respective configurations subsequent to routing of the at least one optical signal (e.g., telemetry signal, etc.).

The apparatus may also include wherein the management device is communicatively coupled to a data communication network, wherein the data communication network is configured to route one or more data signals using the peer-to-peer network.

The apparatus may also include wherein configurations of the management device and the command/response optical device are determined based on a timestamp associated with connection of the data communication network to the peer-to-peer network.

The apparatus may also include wherein configurations of the management device and the command/response optical device are configured to be merged with one or more configurations of management device and command/response optical device of at least another cable landing station based on the timestamp.

In one aspect, a computer-implemented method may include receiving, using at least one processor, a request for routing at least one optical signal (e.g., telemetry signal, etc.); accessing, using the at least one processor, a topology map of a peer-to-peer network of a plurality of cable landing stations; determining, using the at least one processor, using the topology map, one or more optical communication paths for routing the at least one optical signal (e.g., telemetry signal, etc.); selecting, using the at least one processor, at least one optical communication path; configuring, using the at least one processor, one or more optical devices in the at least one optical communication path for routing of the at least one optical signal (e.g., telemetry signal, etc.); and routing, using the at least one processor, the at least one optical signal (e.g., telemetry signal, etc.) using the configured one or more optical devices in the at least one selected optical communication path.

The method may also include wherein the one or more optical devices include at least one of: one or more network elements, one or more command/response optical device, and any combination thereof.

The method may also include wherein the configuring includes identifying at least one of: at least one network element in the one or more network elements, at least one cable landing station in a plurality of cable landing stations, and any combination thereof; configuring, using one or more routing parameters, the one or more command/response optical devices of respective cable landing stations for routing of the at least one optical signal (e.g., telemetry signal, etc.) from first configurations of the respective one or more command/response optical devices to second configurations of the respective one or more command/response optical devices; and determining, based on the identifying and the configuring, the at least one optical communication path.

The method may also include wherein the one or more command/response optical devices of respective cable landing stations are reconfigured from the second configurations to the first configurations subsequent to routing of the at least one optical signal (e.g., telemetry signal, etc.).

It is emphasized that the Abstract of the Disclosure is provided to allow a reader to quickly ascertain the nature of the technical disclosure. It is submitted with the understanding that it will not be used to interpret or limit the scope or meaning of the claims.. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

The foregoing description has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner and may generally include any set of one or more limitations as variously disclosed or otherwise demonstrated herein.

**Claims**

1. An optical communication system (200, 300), comprising:

    a plurality of cable landing stations (202, 204, 206, 302, 304, 306, 308, 310) configured to be communicatively coupled using one or more optical communication cables in a peer-to-peer network for routing of one or more optical signals using one or more network elements (208);
    each cable landing station in the plurality of cable landing stations includes
    a management device (211, 221, 231) configured to determine one or more optical communication paths for routing the one or more optical signals;
    a command/response optical device (219, 229, 239) communicatively coupled to the management device for routing the one or more optical signals in accordance with the optical communication path;
    wherein, in response to receiving a request for routing at least one optical signal in the one or more optical signals, the management device of each cable landing station is configured to determine at least one optical communication path in the one or more optical communication paths for routing the at least one optical signal in accordance with a topology map (402) of the peer-to-peer network of the plurality of cable landing stations.

2. The system of claim 1, wherein each cable landing station includes a storage location (215, 225, 235) for storing the topology map of the peer-to-peer network.

3. The system of any of claims 1 or 2, wherein determination of the at least one optical communication path includes

identifying at least one of: at least one network element in the one or more network elements, at least one cable landing station in the plurality of cable landing stations, and any combination thereof;

configuring, using one or more routing parameters, one or more command/response optical devices of respective cable landing stations for routing of the at least one optical signal from first configurations of the respective one or more command/response optical devices to second configurations of the respective one or more command/response optical devices; and

determining, based on the identifying and the configuring, the at least one optical communication path.

4. The system of claim 3, wherein the one or more command/response optical devices of respective cable landing stations are reconfigured from the second configurations to the first configurations subsequent to routing of the at least one optical signal.

5. The system of any of claims 1-4, wherein each cable landing station in the plurality of cable landing stations is configured as an active cable landing station.

6. The system of any of claims 1-5, wherein the plurality of cable landing stations is communicatively coupled to a data communication network, wherein the data communication network (210) is configured to route one or more data signals using the peer-to-peer network of the cable landing stations.

7. The system of claim 6, wherein configurations of the management device and the command/response optical device of each cable landing station are determined based on a timestamp associated with connection of the data communication network to the peer-to-peer network of the cable landing stations.

8. The system of claim 7, wherein each cable landing station in the plurality of cable landing stations is configured to merge configurations of its management device and the command/response optical device with one or more configurations of management devices and the command/response optical devices of at least another cable landing station in the plurality of cable landing stations based on the timestamp.

9. The system of any of claims 1-8, wherein the one or more network elements include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof.

10. An optical communication apparatus (202, 204, 206, 302, 304, 306, 308, 310), comprising:

a management device (211, 221, 231) configured to determine one or more optical communication paths for routing one or more optical signals using a topology map (402) of a peer-to-peer network of a plurality of cable landing stations;

a command/response optical device (219, 229, 239) communicatively coupled to the management device for routing the one or more optical signals in accordance with the optical communication path;

wherein, in response to receiving a request for routing at least one optical signal in the one or more optical signals, the management device is configured to determine, using the topology map, at least one optical communication path in the one or more optical communication paths for routing the at least one optical signal to at least another cable landing station in the peer-to-peer network.

11. The apparatus of claim 10, wherein determination of the at least one optical communication path includes

identifying at least one of: at least one network element in one or more network elements, the another cable landing station, and any combination thereof;

configuring, using one or more routing parameters, the command/response device and another command/response optical device of the another cable landing station for routing of the at least one optical signal from first respective configurations of the command/response device and another command/response optical device to second respective configurations of the command/response device and another command/response optical device; and

determining, based on the identifying and the configuring, the at least one optical communication path.

12. The apparatus of claim 11, wherein the one or more network elements include at least one of the following: a smart network element, a smart undersea network element, a branching unit, an optical branching unit, an add/drop branching unit, an optical add/drop branching unit, a power feed branching unit, a repeater, a reconfigurable optical add drop multiplexer (ROADM), and any combination thereof;

wherein the command/response device and another command/response optical device are reconfigured from the second respective configurations to the first respective configurations subsequent to routing of the at least one optical signal.

13. The apparatus of claim 10, wherein the management device is communicatively coupled to a data communication network, wherein the data communication network is configured to route one or more data signals using the peer-to-peer network;

wherein configurations of the management device and the command/response optical device are determined based on a timestamp associated with connection of the data communication network to the peer-to-peer network;

wherein configurations of the management device and the command/response optical device are configured to be merged with one or more configurations of management device and command/response optical device of at least another cable landing station based on the timestamp.

14. A computer-implemented method (500), comprising:

receiving (502), using at least one processor, a request for routing at least one optical signal;

accessing (504), using the at least one processor, a topology map (402) of a peer-to-peer network of a plurality of cable landing stations (202, 204, 206, 302, 304, 306, 308, 310);

determining (506), using the at least one processor, using the topology map, one or more optical communication paths for routing the at least one optical signal;

selecting (508), using the at least one processor, at least one optical communication path;

configuring (510), using the at least one processor, one or more optical devices in the at least one optical communication path for routing of the at least one optical signal, wherein the one or more optical devices include at least one of: one or more network elements (208), one or more command/response optical devices (219, 229, 239), and any combination thereof.; and

routing (512), using the at least one processor, the at least one optical signal using the configured one or more optical devices in the at least one selected optical communication path.

15. The method of claim 14, wherein the configuring includes

identifying at least one of: at least one network element in the one or more network elements, at least one cable landing station in a plurality of cable landing stations, and any combination thereof;

configuring, using one or more routing parameters, the one or more command/response optical devices of respective cable landing stations for routing of the at least one optical signal from first configurations of the respective one or more command/response optical devices to second configurations of the respective one or more command/response optical devices; and

determining, based on the identifying and the configuring, the at least one optical communication path;

wherein the one or more command/response optical devices of respective cable landing stations are reconfigured from the second configurations to the first configurations subsequent to routing of the at least one optical signal.

FIG. 1

FIG. 2A

EP 4 749 954 A1

FIG. 2B

EP 4 749 954 A1

FIG. 2C

FIG. 3A

EP 4 749 954 A1

FIG. 3B

EP 4 749 954 A1

FIG. 4

EP 4 749 954 A1

500

Receive a request for routing at least one optical signal — 502

↓

Access a topology map of a peer-to-peer network of a plurality of cable landing stations — 504

↓

Determine, using the topology map, one or more optical communication paths for routing at least one optical signal — 506

↓

Select at least one optical communication path — 508

↓

Configure one or more optical devices in at least one optical communication path for routing of at least one optical signal — 510

↓

Route at least one optical signal using configured one or more optical devices in at least one selected optical communication path — 512

FIG. 5

FIG. 6

**EP 4 749 954 A1**

Europäisches
Patentamt
European
Patent Office
Office européen
des brevets

# EUROPEAN SEARCH REPORT

**Application Number**

EP 25 21 4646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/149650 A1 (TSALTSKAN YURIY [US] ET AL) 25 May 2017 (2017-05-25) | 1-3,5-7, 9-12,14, 15 | INV.<br>H04B10/2575<br>H04B10/278<br>H04J14/02 |
| A | * paragraphs [0016] - [0109]; figures 1-3, 6b * | 4,8,13 | |
| Y | US 2020/084209 A1 (KRAM RICHARD [US] ET AL) 12 March 2020 (2020-03-12)<br>* paragraphs [0016] - [0033]; figure 1 * | 1,10,14 | |
| Y | EP 1 892 919 B1 (HUAWEI TECH CO LTD [CN]) 24 August 2011 (2011-08-24)<br>* paragraph [0004]; figure 1 * | 1,10,14 | |

**TECHNICAL FIELDS SEARCHED (IPC)**

H04B
H04J

The present search report has been drawn up for all claims

| Place of search | Date of completion of the search | Examiner |
|---|---|---|
| Munich | 26 March 2026 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

## ANNEX TO THE EUROPEAN SEARCH REPORT
## ON EUROPEAN PATENT APPLICATION NO.

EP 25 21 4646

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2026

| Patent document cited in search report | | Publication date | Patent family member(s) | | Publication date |
|---|---|---|---|---|---|
| US 2017149650 | A1 | 25-05-2017 | CN | 108293007 A | 17-07-2018 |
| | | | EP | 3381155 A1 | 03-10-2018 |
| | | | JP | 6817322 B2 | 20-01-2021 |
| | | | JP | 2019503632 A | 07-02-2019 |
| | | | US | 2017149650 A1 | 25-05-2017 |
| | | | WO | 2017091395 A1 | 01-06-2017 |
| US 2020084209 | A1 | 12-03-2020 | CN | 110896506 A | 20-03-2020 |
| | | | EP | 3624399 A1 | 18-03-2020 |
| | | | JP | 7436090 B2 | 21-02-2024 |
| | | | JP | 2020042821 A | 19-03-2020 |
| | | | US | 2020084209 A1 | 12-03-2020 |
| EP 1892919 | B1 | 24-08-2011 | AT | E522066 T1 | 15-09-2011 |
| | | | CN | 1881918 A | 20-12-2006 |
| | | | CN | 101164314 A | 16-04-2008 |
| | | | EP | 1892919 A1 | 27-02-2008 |
| | | | ES | 2369401 T3 | 30-11-2011 |
| | | | US | 2007160039 A1 | 12-07-2007 |
| | | | WO | 2006133633 A1 | 21-12-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10110466 B, Tsaltskan